# EUROPEAN PATENT APPLICATION

(11) **EP 4 753 235 A1**
(43) Date of publication of application: **03.06.2026**
(21) Application number: 24857629.0
(22) Date of filing: 09.02.2024
(51) Int. Cl.: H04L 67/12

(54) **CHIP, NETWORKING SYSTEM AND ELECTRONIC DEVICE**

(30) Priority: 25.08.2023 WO PCT/CN2023/115046; 26.12.2023 WO PCT/CN2023/142094
(71) Applicant: Shenzhen Goodix Technology Co., Ltd., Shenzhen, Guangdong 518045 (CN)
(72) Inventor: WANG, Jihui, Shenzhen, Guangdong 518045 (CN); DAI, Xuewei, Shenzhen, Guangdong 518045 (CN); YANG, Chunmei, Shenzhen, Guangdong 518045 (CN)
(74) Representative: Kraus & Lederer PartGmbB
(86) International application number: PCT/CN2024/077134
(87) International publication number: WO 2025/044073

(57) **Abstract**

The present disclosure provides a chip, a network system, and an electronic device. The chip is used for a target node of a network system to implement data transmission, wherein the network system comprises a plurality of nodes connected, the target node is any node among the plurality of nodes; and the chip comprises: a data scheduling unit and at least one data transmission unit; wherein the data scheduling unit is configured to: obtain a data packet and process the data packet based on a physical layer; and the at least one data transmission unit is configured to: receive the data packet and transmit the data packet to the data scheduling unit for processing based on the physical layer, and/or transmit the data packet processed by the data scheduling unit to a node adjacent to the target node in the network system based on the physical layer.

## Description

The present disclosure claims priority to a PCT patent application with a filing date of 25 August 2023, an application number of "PCT/CN2023/115046" and a patent title of "DATA FORWARDING METHOD, CHIP, AND ELECTRONIC DEVICE" and claims priority to a PCT patent application with a filing date of 26 December 2023, an application number of "PCT/CN2023/142094" and a patent title of "METHOD FOR TRANSMITTING NETWORK DATA, CHIP, AND COMMUNICATION SYSTEM," the entire contents of which are incorporated herein by reference.

### TECHNICAL FIELD

Embodiments of the present disclosure relate to the technical field of electronic communication, and particularly relate to a chip, a network system, and an electronic device.

### BACKGROUND

Nowadays, vehicle devices and functions thereof tend to be diversified. Various kinds of data are transmitted in a vehicle to satisfy different application scenarios of vehicle systems. At present, a mainstream solution for vehicle data transmission is transmission based on an Ethernet and a Controller Area Network (CAN) bus. However, with the development of intelligence, the CAN bus fails to satisfy the requirements for transmission rate and latency. At present, vehicle Ethernet uses conventional switch-based communication, which is mature and reliable, but requires a plurality of switches to connect a plurality of electronic control units (ECUs) in the vehicle, is obviously expensive with complex implementation, fails to support a more flexible node interconnection scenario and application to a complex interconnection structure, and suffers from a large transmission latency.

Therefore, a technical solution needs to be provided to reduce the cost and transmission latency of a network system (including but not limited to a vehicle network system).

### SUMMARY

In view of the above, embodiments of the present disclosure provide a chip, a network system, and an electronic device, to at least partially solve the above problems.

According to an embodiment in a first aspect of the present disclosure, a chip is provided for a target node of a network system to implement data transmission, wherein the network system comprises a plurality of nodes connected, the target node is any node among the plurality of nodes; and the chip comprises: a data scheduling unit and at least one data transmission unit;
wherein the data scheduling unit is configured to: obtain a data packet and process the data packet based on a physical layer; and
the at least one data transmission unit is configured to: receive the data packet and transmit the data packet to the data scheduling unit for processing based on the physical layer, and/or transmit the data packet processed by the data scheduling unit to a node adjacent to the target node in the network system based on the physical layer.

In some optional embodiments, the chip implements data transmission via a real-time pipeline, wherein the data scheduling unit is configured to: process the data packet based on the physical layer via the real-time pipeline; and the at least one data transmission unit is configured to: transmit the data packet to the data scheduling unit via the real-time pipeline, and/or transmits the data packet processed by the data scheduling unit to the node adjacent to the target node in the network system via the real-time pipeline.

In some optional embodiments, the at least one data transmission unit comprises a first data transmission unit and a second data transmission unit, wherein the first data transmission unit is configured to: receive a data packet transmitted from a preceding node adjacent to the target node in the network system, and transmit the data packet to the data scheduling unit for processing, such that the data scheduling unit transmits a processed data packet to the second data transmission unit; and the second data transmission unit is configured to: receive the data packet processed by the data scheduling unit, and transmit the processed data packet to a succeeding node adjacent to the target node in the network system.

In some optional embodiments, the data packet comprises a common header, and the common header comprises a preamble for identifying a physical layer protocol of the data packet.

In some optional embodiments, the data scheduling unit comprises: a first processing module and a second processing module; wherein
the first processing module is configured to: obtain node data, process the node data, and then send processed node data to the second processing module, wherein the node data is generated by the target node, or the node data is generated by a peripheral device connected to the target node; and the second processing module is configured to: obtain the data packet, and load the node data obtained from the first processing module into the data packet, such that at least one data transmission unit transmits the data packet loaded with the node data to the node adjacent to the target node in the network system.

In some optional embodiments, the data packet comprises a plurality of data fields; and the second processing module is specifically configured to: load, in response to an idle data field being present in the data packet, the node data into the idle data field.

In some optional embodiments, the first processing module is specifically configured to: transmit, based on a priority of the node data, the node data to the second processing module.

In some optional embodiments, the data packet comprises a plurality of data fields; and the second processing module is specifically configured to: determine a priority of loaded data in one data field among the plurality of data fields; and replace, in response to one data field among the plurality of data fields being a first data field in which the priority of loaded data is lower than the priority of the node data, the loaded data in the first data field with the node data.

In some optional embodiments, the chip further comprises: a replacement cache module configured to: cache, after the second processing module replaces the node data into the first data field, the loaded data in the first data field prior to being replaced.

In some optional embodiments, the second processing module is further configured to: increase, in response to a time during which the node data having a low priority is not loaded into the data packet exceeding a preset time, the priority of the node data.

In some optional embodiments, the first processing module is further configured to: unpack the node data in response to the node data having a data length greater than a preset length, to obtain at least two node data fragments each with a data length less than or equal to the preset length, transmit the node data fragments to the second processing module; and directly transmit the node data to the second processing module in response to the node data having the data length less than or equal to the preset length.

In some optional embodiments, the second processing module is further configured to: load a plurality of duplicate node data into the data packet.

In some optional embodiments, the data scheduling unit comprises: a first processing module and a second processing module; wherein the second processing module is configured to: obtain the data packet from the data transmission unit, obtain data corresponding to the target node from the data packet, and transmit the data corresponding to the target node to the first processing module; and the first processing module is configured to: transmit the data corresponding to the target node to a peripheral device connected to the target node, and/or transmit the data corresponding to the target node to a local module of the target node.

In some optional embodiments, the data scheduling unit comprises: a second processing module; wherein the second processing module is configured to: obtain the data packet from the first data transmission unit, and transmit, in response to identifying that the data packet does not include data having the target node as a destination node, the data packet to the second data transmission unit.

In some optional embodiments, the data packet comprises a plurality of data fields, each of the data fields comprises a data sub-block and a data sub-block header, the data sub-block is configured to load data, and the data sub-block header is configured to record destination node identification information for indicating a destination node to which data loaded in the data sub-block is to be transmitted; and the second processing module is specifically configured to: determine whether a second data field is present in each data field based on the destination node identification information recorded in the data sub-block header of each data field, wherein destination node identification information recorded in a data sub-block header of the second data field indicates that a destination node of data loaded in the second data field is the target node; and obtain, in response to the second data field being present, data loaded in a data sub-block of the second data field from the data packet.

In some optional embodiments, the second processing module is further configured to: mark, in response to obtaining the data loaded in the data sub-block of the second data field, the second data field as an idle data field in the data packet.

In some optional embodiments, the second processing module is further configured to: transmit the data corresponding to the target node to the first processing module based on a priority of the data corresponding to the target node.

In some optional embodiments, the first processing module is further configured to: pack, in response to identifying that unpacking identification information for indicating that the data is unpacked data is present in data corresponding to a plurality of target nodes, the data corresponding to the plurality of the target nodes, to obtain packed data, transmit the packed data to the peripheral device connected to the target nodes, and/or transmit the packed data to the local module of the target nodes.

In some optional embodiments, the data packet comprises a plurality of data fields, and the plurality of data fields are configured to be simultaneously loaded with data of at least two different data types.

In some optional embodiments, the target node is connected to a peripheral device, and the peripheral device comprises at least one of types below: a LIN bus peripheral device, a PWM drive device, an I2C peripheral device, a SPI bus peripheral device, a QSPI bus peripheral device, a GPIO peripheral device, an Ethernet peripheral device, a CAN bus peripheral device, a peripheral device with a MII and peripheral devices with various extensions and derivatives of the MII, a UART peripheral device, a SENT bus peripheral device, a peripheral device supporting PSI5 protocol, an I2S peripheral device, a TDM peripheral device, an AMIC peripheral device, a DMIC peripheral device, and an ADC peripheral device.

In some optional embodiments, the data packet comprises a plurality of data fields temporally divided into a plurality of time slices, such that a preceding data field among the plurality of data fields in the data packet is temporally first transmitted or processed by the target node.

According to an embodiment in a second aspect of the present disclosure, a network system is provided, comprising: a plurality of nodes connected, wherein any node among the plurality of nodes comprises the chip according to any one implementation in the first aspect, and the chip is used by the node to implement data transmission based on the physical layer.

In some optional embodiments, the plurality of nodes are connected to form a ring-shaped network structure, the plurality of nodes comprise a master node and at least two child nodes, the master node initiates transmission of a data packet, and the data packet is sequentially transmitted through the at least two child nodes and then received by the master node.

According to an embodiment in a third aspect of the present disclosure, an electronic device is provided, comprising: the chip according to any one implementation in the first aspect.

The chip provided according to an embodiment of the present disclosure is used for a target node of a network system to implement data transmission, its data scheduling unit can obtain a data packet and process the data packet based on the physical layer, and at least one of its data transmission units can receive the data packet and transmit the data packet to the data scheduling unit for processing based on the physical layer, and/or transmit the data packet processed by the data scheduling unit to the node adjacent to the target node in the network system based on the physical layer. Therefore, when the chip provided in the present disclosure is used to establish the network system, the chip can implement transmission of the data packet directly based on the physical layer without the need for data encapsulation by processors (such as MCUs) based on a standard protocol, that is, without the need for processing based on a high-level protocol above the physical layer, but implement processing and transmission directly based on the physical layer to ensure the reliability of data transmission in the network system, or can implement real-time forwarding of the data packet by transmission directly based on the physical layer. In addition, in this way, the data packet can be transmitted without the need for a switch, and the requirements of nodes in the network system for the processors (such as the MCUs) are reduced during transmission of the data packet, thereby effectively reducing the transmission latency of the data packet, and reducing costs by reducing the number of switches and processors (such as the MCUs).

### BRIEF DESCRIPTION OF DRAWINGS

To more clearly describe technical solutions in embodiments of the present disclosure or the prior art, drawings required to be used in the description of the embodiments or the prior art will be briefly introduced below. Apparently, the drawings in the description below are merely some embodiments disclosed in the embodiments of the present disclosure. For those of ordinary skills in the art, other drawings may also be obtained based on these drawings.
FIG. 1A shows a simplified schematic diagram of an example vehicle network system in the related art.
FIG. 1B shows an example data packet format in the related art.
FIG. 2A shows a schematic diagram of an example chip in the present disclosure.
FIG. 2B shows an example transmission path in which some example chips obtain data packets transmitted from other nodes.
FIG. 2C shows a schematic diagram of another example chip in the present disclosure.
FIG. 3A shows a schematic structural diagram of an example network system in the present disclosure.
FIG. 3B shows a schematic structural diagram of another example network system in the present disclosure.
FIG. 4 shows a data packet format of an example data packet in the present disclosure.
FIG. 5 shows a schematic diagram of an example data scheduling unit in the present disclosure.
FIG. 6 shows a schematic diagram of replacing high-priority node data into a first data field.

Description of reference numerals in the figures:
100. Chip; 102. Data scheduling unit; 1021. First processing module; 1022. Second processing module; 1023. Peripheral device; 1024. Peripheral interface; 1025. First cache module; 1026. Replacement cache module; 1027. Second cache module; 104. Data transmission unit.

### DETAILED DESCRIPTION

To enable those skilled in the art to better understand technical solutions in embodiments of the present disclosure, the technical solutions in the embodiments of the present disclosure will be clearly described in detail below with reference to the drawings in the embodiments of the present disclosure. Apparently, the described embodiments are merely some, instead of all, of the embodiments of the present disclosure. All other embodiments obtained by those of ordinary skills in the art based on some embodiments among the embodiments of the present disclosure should be encompassed within the scope of protection of the embodiments of the present disclosure.

Nowadays, vehicle devices and functions thereof tend to be diversified. Various kinds of data are transmitted in a vehicle to satisfy different application scenarios of vehicle systems. At present, a mainstream solution for vehicle data transmission is transmission based on an Ethernet and a Controller Area Network (CAN) bus. However, with the development of intelligence, the CAN bus fails to satisfy the requirements for transmission rate and latency. At present, vehicle Ethernet uses conventional switch-based communication, which is mature and reliable, but requires a plurality of switches to connect a plurality of electronic control units (ECUs) in the vehicle, is obviously expensive with complex implementation, fails to support a more flexible node interconnection scenario and application to a complex interconnection structure, and suffers from a large transmission latency. It should be understood that the term "vehicle," "vehicle-mounted," or "in-vehicle," or other similar terms used herein generally include various private vehicles or commercial vehicles, such as a sedan, a sport utility vehicle, a bus, or a truck, further include various boats, ships, aircrafts, etc., and include a hybrid vehicle, an electric vehicle, a plug-in hybrid electric vehicle, a hydrogen-powered vehicle, other alternative fuel vehicles, and the like.

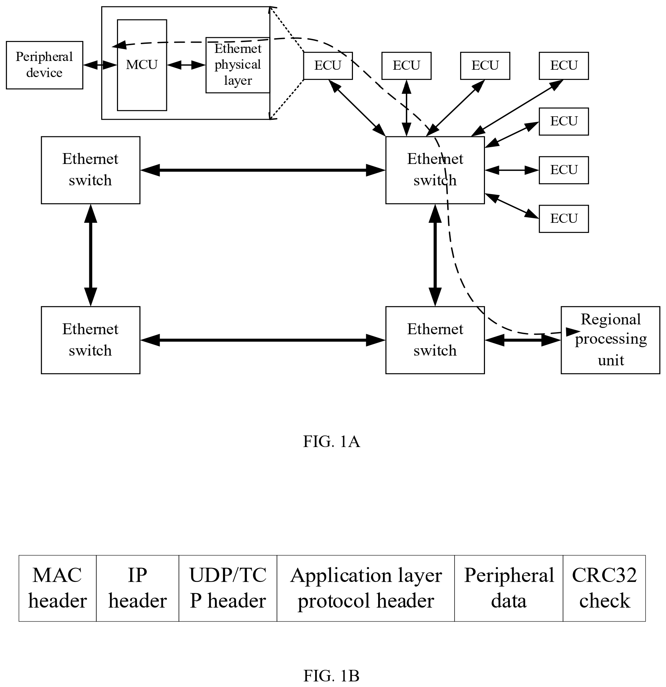

The above content may be understood with reference to example explanations of the related art below. In the related art, a vehicle ECU is generally composed of a microcontroller unit (MCU), a memory (such as a read-only memory (ROM) or a random access memory (RAM)), an input/output interface (I/O interface), an analog-to-digital converter (A/D converter), and a large-scale integrated circuit such as shaping and driving. For example, referring to FIG. 1A, a simplified schematic diagram of an example vehicle network system in the related art is shown. It shows a plurality of ECUs connected to a switch (Ethernet switch), and the structure of one of the ECUs is shown in a simplified way. A MCU in the ECU serves for local processing of data, such as collecting peripheral data from a peripheral device (including but not limited to a sensor or other devices), encapsulating the data into an Ethernet message, and sending the message to a remote regional processing unit through the switch (which may be used for data forwarding). On the contrary, the MCU can receive data from the switch, and parse the data based on an Ethernet protocol for local control. As shown in FIG. 1A, the data needs to be sent and received after being processed by the MCU through an Ethernet physical layer. The data is transmitted following a standard Ethernet protocol, with a large latency caused by data processing. With the rapid development of smart vehicles, the number of ECUs per vehicle has surged, reaching dozens or hundreds in high-end intelligent vehicles. Obviously, the growing number of ECUs will substantially increase costs, while introducing greater latency accordingly.

As another example, referring to FIG. 1B, an example data packet format is shown. The above FIG. 1A is an example of transmitting collected peripheral data from an ECU to the remote regional processing unit following a standard Ethernet transmission protocol, wherein the data needs to be encapsulated into the data packet format shown in FIG. 1B (the example data packet format in FIG. 1B includes a Media Access Control (MAC) header, an Internet Protocol (IP) header, a User Datagram Protocol/Transmission Control Protocol (UDP/TCP) header, an application layer protocol header, peripheral data, and Cyclic Redundancy Check (CRC) 32 data). That is to say, data transmitted following a standard Ethernet usually needs to be processed through multi-layer protocols, including a physical layer, a MAC layer, an IP layer, a UDP/TCP layer, and an application layer, thereby encapsulating original peripheral data into the data packet format shown in FIG. 1B. This will cause a large overhead in case of a small data volume of the peripheral data. First, the network bandwidth utilization will be significantly reduced because the peripheral data accounts for a very small proportion of the entire data packet; and second, there is a large transmission latency. For example, a typical value of transmission latency is divided into: a latency in receiving peripheral device data by the MCU (about 1 us), a latency in encapsulating the peripheral data into a data packet (the example data packet here is a standard Ethernet data packet) by the MCU (about 10 us), and a latency in transmitting the data packet in two switches (about 500 us), as well as a latency in parsing the data packet and obtaining the peripheral data by the regional processing unit (about 5 us). Such a large transmission latency makes it increasingly difficult to satisfy the requirements for use of the present vehicle network system.

In view of the above, the present disclosure provides a chip, a network system, and an electronic device, to solve the above problems. The technical solutions in the embodiments of the present disclosure can support the transmission of a data packet in a physical layer, and can be well adapted to small-granularity data transmission. It should be noted that the technical solutions in the embodiments of the present disclosure are not limited to application to a network system in a vehicle scenario, and may also be applied to other scenarios.

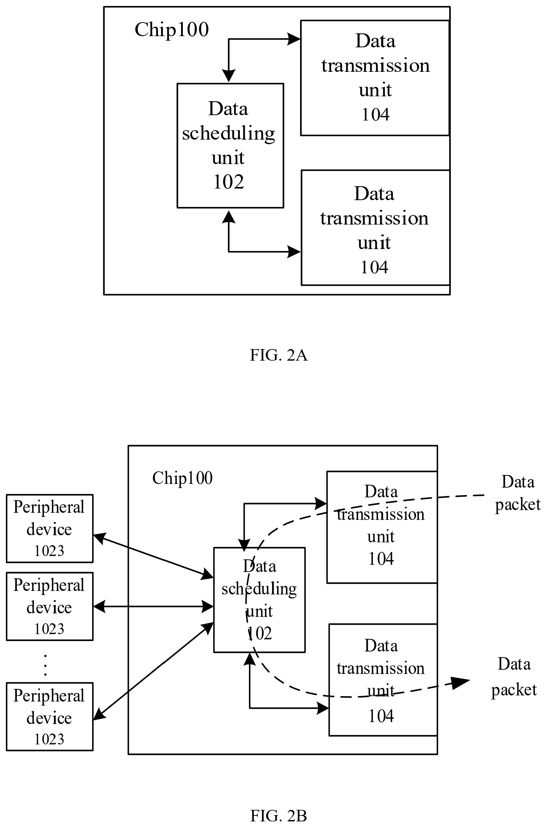

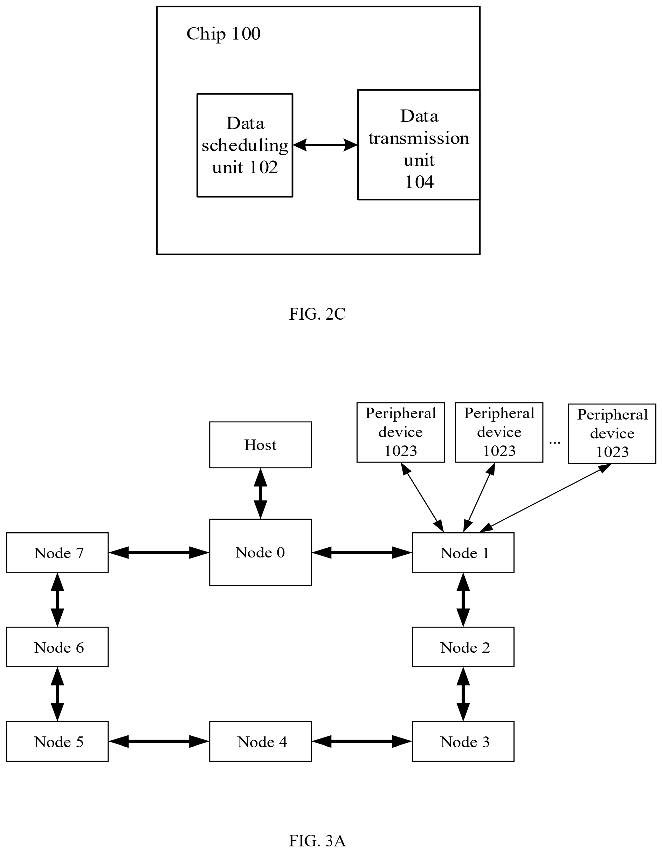

Referring to FIGS. 2A, 2B, and 2C, the chip 100 is used for a target node of a network system to implement data transmission, wherein the network system comprises a plurality of nodes connected, the target node is any node among the plurality of nodes; and referring to FIG. 2A, the chip 100 comprises: a data scheduling unit 102 and at least one data transmission unit 104; wherein the data scheduling unit 102 is configured to: obtain a data packet and process the data packet based on a physical layer; and the at least one data transmission unit 104 is configured to: receive the data packet based on the physical layer and transmit the data packet to the data scheduling unit 102 for processing, and/or transmit the data packet processed by the data scheduling unit 102 to a node adjacent to the target node in the network system based on the physical layer.

Therefore, the chip 100 provided in the present disclosure is used for a target node of a network system to implement data transmission, its data scheduling unit 102 can obtain a data packet and process the data packet based on the physical layer, and at least one of its data transmission units 104 can receive the data packet based on the physical layer and transmit the data packet to the data scheduling unit 102 for processing, and/or transmit the data packet processed by the data scheduling unit 102 to the node adjacent to the target node in the network system based on the physical layer. Therefore, when the chip 100 provided in the present disclosure is used to establish the network system, the chip 100 can implement transmission of the data packet directly based on the physical layer without the need for data encapsulation by processors (such as MCUs) based on a standard protocol, that is, without the need for processing based on a high-level protocol above the physical layer, but implement processing and transmission directly based on the physical layer to ensure the reliability of data transmission in the network system, or can implement real-time forwarding of the data packet by transmission directly based on the physical layer. In addition, in this way, the data packet can be transmitted without the need for a switch, and the requirements of nodes in the network system for the processors (such as the MCUs) are reduced during transmission of the data packet, thereby effectively reducing the transmission latency of the data packet, and reducing costs by reducing the number of switches and processors (such as the MCUs).

It is understandable that when the requirements of the nodes in the network system for the processors (such as the MCUs) are reduced, software development workload of the nodes is favorably reduced, thereby reducing the software development costs.

In a possible implementation, the chip 100 in the present disclosure implements data transmission via a real-time pipeline. Specifically, the data scheduling unit 102 is configured to: process the data packet based on the physical layer via the real-time pipeline, the at least one data transmission unit 104 is configured to: transmit the data packet to the data scheduling unit 102 via the real-time pipeline, and/or the at least one data transmission unit 104 is configured to: transmit the data packet processed by the data scheduling unit 102 to the node adjacent to the target node in the network system via the real-time pipeline. That is, processing of the data packet via the real-time pipeline means immediate real-time processing of the data packet upon its arrival at the target node, rather than processing or transmission only until the entire data packet is completely received.

The chip in the present disclosure implements data transmission via the real-time pipeline, and the data transmission unit and the data scheduling unit respectively transmit and process the data packet via the real-time pipeline, such that data in the received data packet can be processed in real time, that is, upon receipt of a portion of the data in the data packet, the portion of the data is immediately transmitted and processed, thereby further reducing the data transmission latency, and ensuring that the data in the data packet can be transmitted and processed in real time. However, in the prior art, only after all data in a data packet is completely received, can transmission or processing be started by switch-based transmission or other software-based or wireless transmission of the data packet, thereby resulting in a large latency.

The chip 100 in the present disclosure can be applied to any scenario, for example, can be adapted to a scenario of vehicle audio data transmission, and can also satisfy the requirements for a scenario where a low latency is required, including but not limited to an Advanced Driving Assistance System (ADAS), etc.

In the present disclosure, the network system may be a network system of any structural type, for example, may be a ring-shaped network or a daisy-chain network. The network system may comprise a plurality of nodes, which may be connected through a physical transmission medium (for example, a shielded twisted pair, an unshielded twisted pair, or a coaxial cable, which is not specifically limited in the present disclosure). The nodes may each be any device, module or chip capable of implementing the solutions of the present disclosure. Specifically, each node among the plurality of nodes comprises a chip 100 for data transmission in the network system. It is understandable that the node may be a chip, that is to say, the chip 100 may also be used directly as a node. For different types of network systems, a master node among the plurality of nodes may be first specified, and the other nodes except for the master node among the plurality of nodes may be known as child nodes. It should be noted that the network system in an embodiment of the present disclosure may comprise only two nodes, namely a master node and a child node.

Each node among the plurality of nodes in the present disclosure may be connected to a peripheral device 1023 (as shown in FIG. 2B), to implement different functional applications by connecting the node to the peripheral device. For example, types of the peripheral device 1023 may include at least one of types below: a Local Interconnect Network (LIN) bus peripheral device, a Pulse Width Modulation (PWM) drive device, an Inter-Integrated Circuit (I2C) bus peripheral device, a Serial Peripheral Interface (SPI) bus peripheral device, a Quad Serial Peripheral Interface (QSPI) bus peripheral device, a General-purpose input/output (GPIO) peripheral device, an Ethernet peripheral device, a Controller Area Network (CAN) bus peripheral device, a peripheral device with a Media Independent Interface (MII) and peripheral devices with various extensions and derivatives of the MII, a Universal Asynchronous Receiver/Transmitter (UART) peripheral device, a Single Edge Nibble Transmission (SENT) bus peripheral device, a peripheral device supporting Peripheral Sensor Interface 5 (PSI5) protocol, an Inter-IC Sound (I2S) bus peripheral device, a Time-Division Multiplexing (TDM) peripheral device, an Analog Microphone (AMIC) peripheral device, a Digital Microphone (DMIC) peripheral device, and an Analog-to-digital converter (ADC) peripheral device. The chip 100 applied to the target node in the present disclosure supports the above plurality of types of peripheral devices, and therefore has wider adaptability.

Various extensions and derivatives of the above media independent interfaces may include, for example: a Reduced Media Independent Interface (RMII), a Gigabit Media Independent Interface (GMII), a Reduced Gigabit Media Independent Interface (RGMII), etc.

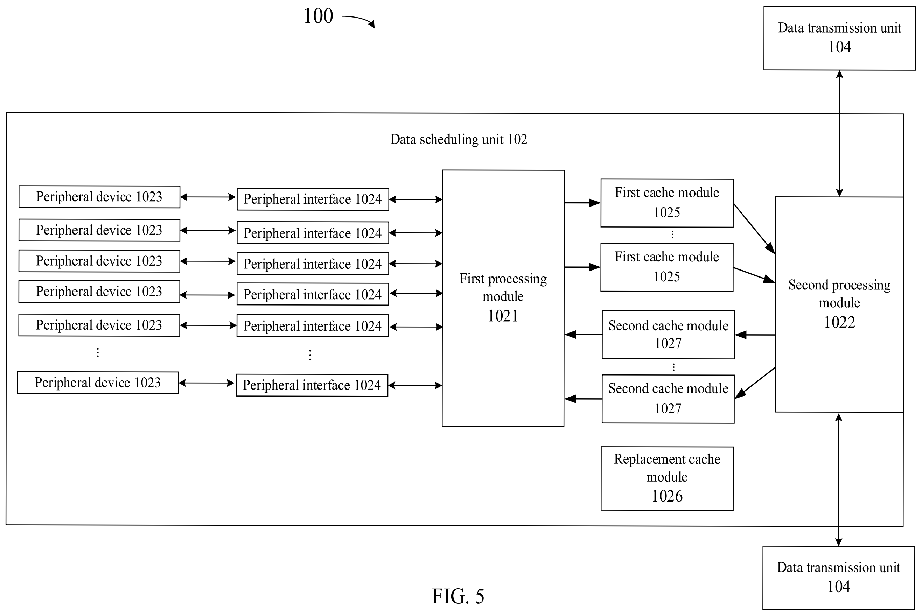

The present disclosure does not impose any limitation on the connection mode among the nodes and the peripheral devices. For example, the chip 100 in the nodes may comprise a peripheral interface 1024 (understood with reference to FIG. 5) adapted and connected to the aforementioned type of the peripheral device 1023. The peripheral device 1023 is connected to the peripheral device 1024, to connect the node to the peripheral device, and facilitate data interaction between the node and the peripheral device. For example, more specifically, the peripheral device may be various communication sensing devices, such as a microphone, a speaker, an audio amplifier, a millimeter wave radar, a lidar, an ultrasonic radar, a camera, a positioning system, a speed sensor, a humidity sensor, a light intensity sensor, or a speaker. For example, in a vehicle audio scenario, the peripheral device may be a speaker and/or a microphone.

It should be understood that since the chip 100 of the target node (which may be any one node) of the network system in the present disclosure is integrated with a rich set of peripheral interfaces, thereby implementing data transmission with a rich variety of peripheral devices.

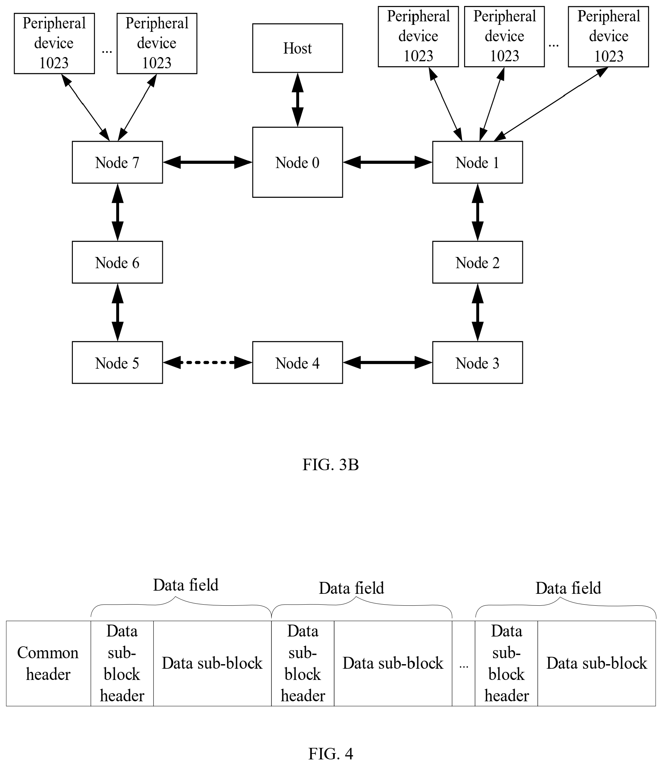

It should be understood that FIG. 2A shows a schematic structure of the chip 100, which may be an intermediate node or a master node of some network systems, including two data transmission units 104. Specific content of the intermediate node will be further illustrated below, and will not be detailed here. For example, the master node can be used as a master node (node 0) as shown in FIG. 3A below. One data transmission unit 104 may be configured to receive a data packet transmitted from a preceding node (node 7) adjacent to the target node in the network system, and the other data transmission unit 104 may be configured to transmit a data packet to a succeeding node (node 1) adjacent to the target node in the network system. For example, the master node can be used as a master node (node 0) as shown in FIG. 3B below. One data transmission unit 104 transmits a data packet to a child node in a first daisy-chain network structure, and the other data transmission unit 104 transmits a data packet to a child node in a second daisy-chain network structure. Related content may also be understood by referring to content below.

It should be understood that FIG. 2C shows a schematic structure of the chip 100, which may be a start node or an termination node of some network systems, including a data transmission unit 104. The data transmission unit 104 can transmit a data packet to the succeeding node adjacent to the target node in the network system based on the physical layer, or receive a data packet transmitted from the preceding node adjacent to the target node in the network system based on the physical layer. Related content may also be understood by referring to content below.

For example, referring to FIG. 2B, an example transmission path in which some example chips 100 obtain data packets transmitted from other nodes is shown. The example chip 100 can be used as an intermediate node in a network system. The chip 100 receives a data packet transmitted from an additional node based on the physical layer through a first data transmission unit 104, and is scheduled through the data scheduling unit 102 to send the data packet to an additional node through a second data transmission unit 104. The chip 100 in the present disclosure can transmit data directly based on the physical layer. Compared with the related art in FIG. 1, the chip 100 in the present disclosure transmits data directly based on the physical layer without the need for transmission through a switch and with few requirements for processors (such as MCUs).

For example, FIG. 3A shows a schematic structural diagram of an example network system in the present disclosure. Referring to FIG. 3A, the network system structure is a ring-shaped network. The network system structure in FIG. 3A comprises 8 nodes, namely nodes 0, 1, ..., and 7. It should be understood that the embodiments of the present disclosure do not impose any limitation on the number of nodes, which may be more or less, and is only used as an example herein to facilitate understanding. The node 0 is the master node, and the nodes 1-7 are child nodes. Each node may be connected to a peripheral device. The node 0 is also connected to a host, which may be a device controlling or processing network links. For example, the host may be or may include one or more of various processors, such as a Digital Signal Processor (DSP), a Microcontroller Unit (MCU), and a Central Processing Unit. During data transmission in this network system structure, the master node (the node 0) can directly receive, e.g., data, a message, or a command sent from the host, can encapsulate and integrate the data, the message, or the command, and then can transmit the encapsulated and integrated data, message or command in the downlink to a plurality of child nodes (the nodes 1-7), or the master node can generate data and transmit it in the downlink to the plurality of child nodes. The host controls and instructs the plurality of child nodes in the network system through the master node. Specifically, the host performs data processing through the master node and then transmits the data in the downlink to the plurality of child nodes, or collects data transmitted in the uplink from the plurality of child nodes. During the downlink transmission, the data processing may include, e.g., data encapsulation and unpacking, and during the uplink transmission, the data processing may include, e.g., data decapsulation and packing. A child node can forward data sent from a preceding adjacent node to a succeeding adjacent node, and can obtain data collected by a peripheral device and transmit it to the master node. The master node can directly receive the collected data, or process it and then further transmit the processed data to the host. In the ring-shaped network of FIG. 3A, data transmission includes two directions, namely a first direction and a second direction, wherein the second direction is opposite to the first direction. Data transmission in either direction can be initiated and ended by the master node. For example, the first direction may be regarded as a clockwise direction of the ring-shaped network shown in FIG. 3A, and the second direction may be regarded as a counterclockwise direction of the ring-shaped network shown in FIG. 3A. In the first direction, the data packet transmission direction may be: node 0→node 1→node 2→node 3→node 4→ ... →node 7→node 0. It should be understood that data may be transmitted among any number of nodes along the first direction, or may be transmitted cyclically in the first direction. In the second direction, the data packet transmission direction may be: node 0→node 7→node 6→node 5→... →node 1→node 0. It should be understood that data may be transmitted among any number of nodes along the second direction, or may be transmitted cyclically in the second direction. Optionally, in FIG. 3A, the host can centrally collect node data from the master node and each child node through the master node, or can send data to the master node and each child node through the master node; and each node can respond to the command of the host, receive the data sent from the host, read/write data from/to the peripheral device and/or itself based on the received data, generate node data, and send the node data to the host through the ring-shaped network link for processing. Optionally, configuration information of all nodes is remotely controlled by the host connected to the master node, such as a sending cycle of periodically sending the data packet, a packet length of a data sub-block of the data packet, unpacking configuration and unpacking strategy, packing configuration, and packing strategy. The ring-shaped network system structure shown in FIG. 3A can support more flexible and diverse data transmission and node configuration solutions, to satisfy the network transmission requirements in a variety of scenarios.

As another example, FIG. 3B shows a schematic structural diagram of another example network system in the present disclosure. Referring to FIG. 3B, the network system structure is a daisy-chain network. In the ring-shaped network system structure, the node 4 is disconnected from the node 5 (schematically represented by a dotted double arrow), thus forming two daisy-chain network links: the first daisy-chain network link is composed of nodes the 0, 1, 2, 3, and 4, and the second daisy-chain network link is composed of the nodes 0, 7, 6, and 5. It should be understood that the embodiments of the present disclosure do not impose any limitation on the number of nodes, which may be more or less, and is only used as an example herein. For the first daisy-chain network link, the master node is the node 0, the master node is the start node, the child nodes are the nodes 1, 2, 3, and 4, and the termination node among the 4 child nodes is the node 4. For the second daisy-chain network link, the master node is the node 0, the master node is the start node, the child nodes are the nodes 7, 6, and 5, and the termination node among the 3 child nodes is the node 5. Each node may be connected to a peripheral device. The node 0 is also connected to a host, which may be a device controlling or processing network links. For example, the host may be or may include one or more of various processors, such as a Digital Signal Processor (DSP), a Microcontroller Unit (MCU), and a Central Processing Unit (CPU). For the first daisy-chain network link, the data packet flow direction may include: node 0→node 1→node 2→node 3→node 4, and: node 4→node 3→node 2→node 1→node 0. For the second daisy-chain network link, the data packet flow direction may include: node 0→node 7→node 6→node 5, and: node 5→node 6→node 7→ node 0. Optionally, in FIG. 3B, the host can centrally collect node data from the master node and each child node through the master node, or can send data to the master node and each child node through the master node; and each node can respond to the command of the host, receive the data sent from the host, read/write data from/to the peripheral device and/or itself based on the received data, generate node data, and send the node data to the host through one of the daisy-chain network links for processing. Optionally, configuration information of all nodes is remotely controlled by the host connected to the master node, such as a sending cycle of periodically sending the data packet, a packet length of a data sub-block of the data packet, unpacking configuration and unpacking strategy, packing configuration, and packing strategy. The daisy-chain network structure shown in FIG. 3B can also support more flexible and diverse data transmission and node configuration solutions, to satisfy the network transmission requirements in a variety of scenarios. It is understandable that the disconnection between the nodes 4 and 5 in FIG. 3B is just an example of formation of a double daisy-chain network form, and in other cases, disconnection between two other nodes can also form a double daisy-chain network link. However, in case of a single daisy-chain network form, the nodes 4 and 5 may be connected, and the nodes 0 and 7 are disconnected, or the nodes 0 and 1 are disconnected. It should be understood that a double daisy-chain or a single daisy-chain does not have to be formed based on disconnection of a node in a ring-shaped network link, and a double daisy-chain network or a single daisy-chain network may be directly formed.

It should be understood that the features such as host, master node, and child node involved in the embodiments of the present disclosure may be logical concepts, or may be entity concepts. Further, a plurality of features may be a plurality of physical devices respectively, or a plurality of features may be integrated into one physical device. For example, the host and the master node may be integrated into a circuit board or a physical device. The host may be connected to the master node, and can implement remote control of child nodes of the network system. This is not specifically limited herein.

For example, in the example network system structures shown in the above FIGS. 3A and 3B, the data flow direction of each node may be in the following form:

Master node: Receiving data from other child nodes to a peripheral device connected to the master node; receiving data from other child nodes and further transmitting it to the host; obtaining peripheral data from the peripheral device connected to the master node and transmitting it to other child nodes; receiving data from the host and transmitting it to the peripheral device connected to the master node; directly transmitting data from the master node to the host; receiving data from the host and transmitting it to other child nodes sequentially through the network; receiving data from a child node through the network, and then re-initiating transmission through the network to forward the data back to the destination child node.

Child node: Data from the master node is transmitted to the child node through the network; data from other child nodes is transmitted to the child node through the network; data from other child nodes is transmitted to other nodes with the child node as a transit; data from the child node is transmitted to the master node through the network; and the data from the child node is transmitted to other child nodes through the network.

It should be understood that the chip 100 of the target node (which may be any one node) of the network system in the present disclosure is integrated with a rich set of peripheral interfaces, thereby implementing data transmission with a rich variety of peripheral devices, and implementing low-latency interaction data with the host, so that the host can obtain peripheral data from the target node in a timely manner, and can send data to be sent to the peripheral device of the target node to the peripheral device of the target node in a timely manner; and so that the host remotely controls access to the peripheral device through the network, thereby reducing the requirements of the nodes in the network system for MCUs, and even removing the MCUs to significantly reduce costs. In addition, when the requirements of the nodes in the network system for the processors (such as the MCUs) are reduced, software development workload of the nodes is favorably reduced, thereby reducing the software development costs.

In order to facilitate description of the embodiments of the present disclosure, the chip 100 will be introduced below in conjunction with the network system structures in FIG. 3A and FIG. 3B. However, it should be understood that the above FIGS. 3A and 3B are only examples to facilitate understanding, and are not intended to impose any limitation on the embodiments of the present disclosure.

The chip 100 in the present disclosure is used for the target node of the network system to implement data transmission based on the physical layer. The target node may be any one node among the plurality of nodes included in the network system. Optionally, the physical layer may be an Ethernet physical layer or a private physical layer carried by Low-Voltage Differential Signaling (LVDS), or may be other optional physical layers, and is not specifically limited in the present disclosure. The chip 100 can transmit a data packet directly based on the physical layer without the need for data encapsulation by the processors (such as the MCUs) based on the standard protocol. For example, assuming that the network system is the ring-shaped network system structure in FIG. 3A, the target node may be any one of the nodes 0-7. The chip 100 can be used by each node (for example, the nodes 0-7) in the network system. As mentioned above, the node may be any device, module, or chip. It is understandable that the node may be a chip, that is to say, the chip 100 may also be used directly as a node.

In the present disclosure, the data scheduling unit 102 can obtain the data packet, and process the data packet. The data transmission unit 104 is configured to receive the data packet based on the physical layer and transmit the data packet to the data scheduling unit 102 for processing, and/or transmit the data packet processed by the data scheduling unit 102 to a node adjacent to the target node in the network system, thereby transmitting the data packet directly based on the physical layer. Optionally, if the target node is an intermediate node of the network system, the chip 100 may comprise two data transmission units 104 to facilitate data transmission (which may be understood with reference to FIGS. 2A and 2B). Optionally, if the target node is the start node or the termination node of the network system, the chip 100 may comprise at least one data transmission unit 104.

Optionally, referring to FIG. 4, the format of a data packet transmitted from a node in the present disclosure may include a common header and a plurality of data fields, wherein each of the data fields comprises a data sub-block and a data sub-block header. In the present disclosure, such a data packet format is used to transmit the data packet directly based on the physical layer.

Optionally, the data packet comprises a plurality of data fields temporally divided into a plurality of time slices, such that a preceding data field among the plurality of data fields in the data packet is temporally first transmitted or processed by the target node. It should be understood that since the transmitted data packet in the present disclosure comprises the plurality of data fields, which may be temporally divided into time slices, meaning that data carried by each data field in the data packet is temporally received in real time and in a temporal sequence, and each node will first transmit and/or process data carried by the preceding data field in the data packet. In this case, the target node can immediately transmit and process a portion of data received at a certain time (such as the data carried by the preceding data field) without the need for complete receipt of the entire data packet, that is, the target node transmits and processes the data packet via a real-time pipeline. For example, in FIG. 4, a data field adjacent to the common header in the data packet is data field 1, and a data field adjacent to the data field 1 is data field 2. In a temporal dimension, a time slice of the data field 1 is prior to a time slice of the data field 2. After receiving the first data packet, the target node can perform data processing on the data fields 1 and 2 sequentially, instead of processing after complete receipt of all data loaded in the data field 1, the data field 2, and all other data fields. Therefore, the processing or transmission of the data packet in the embodiments of the present disclosure can be regarded as processing or transmission via the real-time pipeline, which can satisfy the requirements of the network system for real-time data packet transmission. For the sake of brevity, no more details will be given during description of a specific solution.

The common header records some common information about the network and the data packet, such as a preamble for identifying a physical layer protocol of the data packet. The physical layer protocol can be identified based on the preamble of the common header, and the chip 100 of the present disclosure can, based on the identification result, effectively transmit the data packet directly based on the physical layer.

The data sub-block in the data field may be loaded with data. The data may be of any data type, and the different types of peripheral devices mentioned above may correspond to data of different data types. For example, the data types may include, but are not limited to: MAC data, SPI data, CAN data, LIN data, audio data, etc. For example, in the case of the transmission of peripheral data, the peripheral data may be loaded in the data sub-block of the data field of the data packet. For another example, when the host in FIGS. 3A and 3B sends data to the child nodes (the nodes 1-7) through the master node (the node 0), the master node (the node 0) encapsulates the data packet to load the data in the data sub-block of the data field.

Optionally, the data packet in the present disclosure may comprise the plurality of data fields, and the plurality of data fields at least can simultaneously be loaded with data of two different data types, so as to adapt to the requirements for transmission of different data types directly based on the physical layer. Optionally, the data of the two different data types can be loaded in different data fields of the data packet.

The data sub-block header may record relevant information of a corresponding data sub-block. For example, the data sub-block header may record a data type and a data length of the data loaded in the data sub-block, and may additionally optionally comprise at least one of priority indication information, destination node identification information, source node identification information, idle identifier, packet sequence number identifier, etc. The destination node identification information is used to indicate a destination node to which the data loaded in the data sub-block is to be transmitted. For example, the target node identification information may be, e.g., a node number of the destination node or an address of the destination node. The source node identification information is used to indicate a source node that sends the data loaded in the data sub-block. For example, the source node identification information may be, e.g., a node number of the source node or an address of the source node. The packet sequence number identifier is used to indicate a sequence number of data in the data packet, which can serve for the resending mechanism below, and/or may indicate a sequential dependency relationship among data loaded in the plurality of data sub-blocks. The idle identifier is used to indicate whether a data field is idle. The priority indication information will be further introduced below and will not be repeated here.

Optionally, the data sub-block may further comprise check information for checking the data loaded in the data sub-block. The check is optional, but is not limited to, parity check, Cyclic Redundancy Check (CRC), Error Checking and Correcting (ECC) check, etc.

The ECC check based on the physical layer in the technical solutions of the embodiments of the present disclosure can improve the reliability of data transmission, and reduce the probability of occurrence of errors in data transmission.

The optionality of use of the chip 100 in the present disclosure for different nodes in the network system is given below.

It should be noted that for a ring-shaped network (which may be understood with reference to FIG. 3A as that the number of nodes may be more or less, and is used herein only as an example), the start node may be the master node (i.e., the node 0). Since the data packet sent from the master node will eventually return to the master node, the termination node of the ring-shaped network is also the master node (i.e., the node 0), that is, both the start node and the termination node of the ring-shaped network are the master node (i.e., the node 0), and the intermediate nodes may be other child nodes (i.e., the nodes 1-7). For a daisy-chain network (which may be understood with reference to FIG. 3B as that the number of nodes may be more, and is used herein only as an example), the start node may be the master node (i.e., the node 0), and the termination node may be a node located at the end of the daisy-chain link opposite to the start node (for example, for the first daisy-chain network link, the termination node is the node 4; and for the second daisy-chain network link, the termination node is the node 5), and the intermediate nodes may be other nodes located between the start node and the termination node (for the first daisy-chain network link, the intermediate nodes are the nodes 1, 2, and 3; and for the second daisy-chain network link, the intermediate nodes are the nodes 7 and 6).

In some optional embodiments, the target node is the start node of the network system, and the data scheduling unit 102 is further configured to initiate transmission of the data packet, and transmit the data packet processed by the data scheduling unit 102 to the node adjacent to the target node in the network system through the at least one data transmission unit 104.

For example, the example network system structure (ring-shaped network structure) shown in FIG. 3A may be referred to, in which the master node is the start node, that is, the node 0. The node 0 (start node) can receive data sent from the host downward and data from other child nodes, and can also obtain node data, which may be generated by a peripheral device connected to the node 0 (for example, may include peripheral data generated by the peripheral device connected to the node 0), or may be generated by the node 0 (for example, may include various status data of the node 0, etc.). Optionally, in this ring-shaped network structure, the chip 100 of the start node may comprise two data transmission units 104 to facilitate data transmission. Taking the data packet transmission in the first direction (the clockwise direction in the figure) as an example, the data scheduling unit 102 of the chip 100 of the node 0 can encapsulate at least one of the data sent from the host downward, data from other child nodes, and node data into a data packet, and initiate transmission of the data packet. The encapsulated data packet for transmission is transmitted to the node 1 through one of the data transmission units 104. The node 1 can continue to transmit the data packet, further transmit it to the nodes 2-7 sequentially, and then return it to the node 0 (which is equivalent to reaching the termination node in this case). Optionally, the chip 100 of the start node can also perform the same operation as described above through the other data transmission unit 104 and transmit the data packet in the second direction (the counterclockwise direction in the figure). Therefore, the chip 100 of the start node may comprise two data transmission units 104 to support data transmission in both directions, thereby improving the data transmission efficiency, and adapting to a more flexible application scenario. It should be understood that this is only used to facilitate understanding, and does not impose any limitation on the present disclosure.

For example, the example network system structure (double daisy-chain network structure) shown in FIG. 3B may be referred to, in which the master node is the start node, that is, the node 0. The node 0 (start node) can receive data sent from the host downward and data from other child nodes, and can also obtain node data, which may be generated by a peripheral device connected to the node 0 (for example, may include peripheral data generated by the peripheral device connected to the node 0), or may be generated by the node 0 (for example, may include various status data of the node 0, etc.). Optionally, in this daisy-chain network structure, the chip 100 of the start node may comprise two data transmission units 104 to facilitate data transmission. The data scheduling unit 102 of the chip 100 of the node 0 can encapsulate at least one of the data sent from the host downward, data from other child nodes, and node data into a data packet, and initiate transmission of the data packet. The encapsulated data packet for transmission is transmitted to the node 1 through one of the data transmission units 104, and the node 1 can continue to transmit the data packet, and further transmit it to the nodes 2-4 sequentially, that is, the data transmission through the first daisy-chain; or, the encapsulated data packet for transmission is transmitted to the node 7 through the other data transmission unit 104, and the node 7 can continue to transmit the data packet, and further transmit it to the nodes 6 and 5 sequentially, that is, the data transmission through the second daisy-chain. Therefore, the chip 100 of the start node may comprise two data transmission units 104 to support data transmission in both daisy-chains, thereby improving the data transmission efficiency, and adapting to a more flexible application scenario. It should be understood that this is only used to facilitate understanding, and does not impose any limitation on the present disclosure.

Optionally, in case of a single daisy-chain network structure, when the target node is the start node, the chip 100 may comprise only one data transmission unit 104 (which may be understood with reference to FIG. 3B with omission of the nodes 5-7 therein).

Based on the above optional embodiments, the chip 100 in the present disclosure can be effectively applied to the network system to transmit the data packet from the start node to other nodes, so that the data packet can be transmitted in the network system directly based on the physical layer.

In some optional embodiments, the target node is an intermediate node of the network system, and the at least one data transmission unit 104 comprises a first data transmission unit and a second data transmission unit, wherein the first data transmission unit is configured to: receive a data packet transmitted from a preceding node adjacent to the target node in the network system, and transmit the data packet to the data scheduling unit 102 for processing, such that the data scheduling unit 102 transmits a processed data packet to the second data transmission unit; and the second data transmission unit is configured to: receive the data packet processed by the data scheduling unit 102, and transmit the processed data packet to a succeeding node adjacent to the target node in the network system.

For example, the example network system structure (ring-shaped network structure) shown in FIG. 3A may be referred to, in which the master node is the start node, that is, the node 0. The termination node is also the master node. Then the intermediate nodes may be the nodes 1-7. Optionally, in this ring-shaped network structure, the chip 100 of the intermediate nodes may comprise two data transmission units 104 (i.e., the first data transmission unit and the second data transmission unit) to facilitate data transmission. As an example, the data packet is transmitted in the first direction (the clockwise direction in the figure), and the target node is the node 1. After its first data transmission unit obtains the data packet transmitted from a preceding node adjacent to the node 1, namely the node 0, the first data transmission unit can transmit the data packet to the data scheduling unit 102 for processing. The data scheduling unit 102 transmits the processed data packet to the second data transmission unit, and the second data transmission unit 104 transmits the processed data packet to a succeeding node adjacent to the node 1, that is, the node 2. The node 2 can continue to transmit the data packet, further transmit it to the nodes 3 to 7 sequentially, and return it to the node 0. It should be understood that this is only used to facilitate understanding, and does not impose any limitation on the present disclosure.

For example, the example network system structure (daisy-chain network structure) shown in FIG. 3B may be referred to, in which the master node is the start node, that is, the node 0. For the first daisy-chain network link, the intermediate nodes may be the nodes 1, 2, and 3; and for the second daisy-chain network link, the intermediate nodes may be the nodes 7 and 6. Optionally, in this daisy-chain network structure, the chip 100 of the intermediate nodes may comprise two data transmission units 104 (i.e., the first data transmission unit and the second data transmission unit) to facilitate data transmission. In the first daisy-chain network link, the target node is, as an example, the node 1. After its first data transmission unit obtains the data packet transmitted from a preceding node adjacent to the node 1, namely the node 0, the first data transmission unit can transmit the data packet to the data scheduling unit 102 for processing. The data scheduling unit 102 transmits the processed data packet to the second data transmission unit, and the second data transmission unit 104 transmits the processed data packet to a succeeding node adjacent to the node 1, that is, the node 2. The node 2 can continue to transmit the data packet, and further transmit it to the nodes 3-4 sequentially. In the second daisy-chain network link, the target node is, as an example, the node 7. After its first data transmission unit obtains the data packet transmitted from a preceding node adjacent to the node 7, namely the node 0, the first data transmission unit can transmit the data packet to the data scheduling unit 102 for processing. The data scheduling unit 102 transmits the processed data packet to the second data transmission unit, and the second data transmission unit 104 transmits the processed data packet to a succeeding node adjacent to the node 7, that is, the node 6. The node 6 can continue to transmit the data packet, and further transmit it to the node 5 sequentially. It should be understood that this is only used to facilitate understanding, and does not impose any limitation on the present disclosure.

Based on the above optional embodiments, the chip 100 in the present disclosure can be effectively applied to the network system to transmit the data packet from the intermediate node to other nodes, so that the data packet can be transmitted in the network system directly based on the physical layer.

In some optional embodiments, if the target node is the termination node of the network system, the data packet transmitted from the node adjacent to the target node in the network system is received through at least one data transmission unit 104, and the data scheduling unit 102 is further configured to terminate the transmission of the data packet.

For example, the example network system structure (ring-shaped network structure) shown in FIG. 3A may be referred to, in which the master node is the termination node, that is, the node 0. Optionally, in this ring-shaped network structure, the chip 100 may comprise two data transmission units 104 to facilitate data transmission. Taking the data packet transmission in the first direction (the clockwise direction in the figure) as an example, one of the data transmission units 104 of the node 0 receives the data packet transmitted from the node 7 adjacent to the node 0 in the network system, and the data scheduling unit 102 terminates the transmission of the data packet, thus completing the transmission process of the data packet. It should be understood that this is only used to facilitate understanding, and does not impose any limitation on the present disclosure.

For example, the example network system structure (daisy-chain network structure) shown in FIG. 3B may be referred to, in which the master node is the start node, that is, the node 0. The termination node of the first daisy-chain network link is the node 4, and the termination node of the second daisy-chain network link is the node 5. Optionally, in this daisy-chain network structure, the chip 100 of the termination node may comprise a data transmission unit 104 to facilitate data transmission. For example, for the first daisy-chain network link, the node 4 (the termination node) receives the data packet transmitted from the node 3 adjacent to the node 4 in the network system, and the data scheduling unit 102 terminates the transmission of the data packet, thus completing the transmission process of the data packet. For example, for the second daisy-chain network link, the node 5 (the termination node) receives the data packet transmitted from the node 6 adjacent to the node 5 in the network system, and the data scheduling unit 102 terminates the transmission of the data packet, thus completing the transmission process of the data packet. It should be understood that this is only used to facilitate understanding, and does not impose any limitation on the present disclosure.

Based on the above optional embodiments, the chip 100 in the present disclosure can be effectively applied to the network system to terminate, via the termination node, the transmission of the data packet, so that the data packet can be transmitted in the network system directly based on the physical layer.

In some optional embodiments, the target node is the master node of the network system, and can periodically and regularly send data packets, for example, at a periodic interval. The regular time length and period may be set as required. For example, the period may be 50 us.

The structure of the data scheduling unit 102 is not specifically limited in the present disclosure, and the data scheduling unit may be implemented in any suitable manner. For example, referring to a schematic diagram of an example data scheduling unit shown in FIG. 5, in some optional embodiments, the data scheduling unit 102 comprises: a first processing module 1021 and a second processing module 1022; wherein the first processing module 1021 is configured to: obtain node data, process the node data, and then send processed node data to the second processing module 1022, wherein the node data is generated by a target node, or the node data is generated by a peripheral device connected to the target node; and the second processing module 1022 is configured to: obtain the data packet, and load the node data obtained from the first processing module 1021 into the data packet, such that at least one data transmission unit 104 transmits the data packet loaded with the node data to the node adjacent to the target node in the network system.

Based on the above, through such an embodiment in the present disclosure, the chip 100 can effectively load the data generated by the target node or the data from the peripheral device into the data packet, so as to effectively transmit the data generated by the target node or the data from the peripheral device with the data packet directly based on the physical layer, to better adapt to data transmission in the network system.

Optionally, when the node data is generated by the target node, it may be status data of the target node, including but not limited to register data, etc. When the node data is generated by the peripheral device, it may be peripheral data of the peripheral device, including but not limited to sensing data collected by the peripheral device, stored data, and status data of the peripheral device, etc.

In some optional embodiments, the first processing module 1021 is further configured to: unpack the node data in response to the node data having a data length greater than a preset length, to obtain at least two node data fragments each with a data length less than or equal to the preset length, transmit the node data fragments to the second processing module 1022; and directly transmit the node data to the second processing module 1022 in response to the node data having the data length less than or equal to the preset length.

Based on the above, in the present disclosure, node data with a great data length is unpacked through such a first processing module 1021, thereby ensuring that the node data can be effectively loaded into the data packet, to facilitate data transmission.

Optionally, the preset length may be a maximum data length that can be loaded in a divided data field in the data packet. If the data length of the node data does not exceed the preset length, it does not need to be unpacked.

For example, if the node data is an Ethernet packet obtained from an Ethernet device (a peripheral device), the Ethernet packet generally has a large data volume. If its data length is greater than the preset length, the Ethernet packet is unpacked to obtain a plurality of node data fragments, which are then transmitted to the second processing module 1022.

Optionally, the second processing module 1022 may be used for bus processing of physical layer data. After the data packet is obtained, the data packet can be parsed at the physical layer and the node data can be loaded into the data packet.

Optionally, referring to FIG. 5, the chip 100 may further comprise a plurality of peripheral interfaces 1024, wherein the peripheral interfaces 1024 may be used for connection with the peripheral device 1023 to facilitate obtaining node data generated by the peripheral device 1023.

In some optional embodiments, the data packet comprises a plurality of data fields; and the second processing module 1022 is specifically configured to: load, in response to an idle data field being present in the data packet, the node data into the idle data field.

Based on the above, in the above embodiments of the present disclosure, the second processing module 1022 can load the node data into the idle data field present in the data packet, to ensure that the node data can be effectively loaded into the data packet, such that the data generated by the target node or the data from the peripheral device can be transmitted with the data packet directly based on the physical layer.

Optionally, when the node data is loaded into the idle data field, the node data may be loaded into a data sub-block of the data field, and its data sub-block header may be updated based on the node data. It should be understood that the optional data packet format of the data packet in the present disclosure, as well as the relevant optional contents of the data field, the data sub-block, and the data sub-block header, has been introduced above, and will not be repeated here.

In the present disclosure, whether an idle data field is present in the data packet can be determined in any suitable way. Optionally, the data sub-block header comprised in the data field may comprise an idle identifier, and the idle identifier may indicate whether the data field is idle. For example, when the idle identifier is a first value, the data field is an idle data field, and when the idle identifier is a second value, the data field is a non-idle data field (for ease of understanding, it may be understood as that a blank identifier is a 1-bit binary identifier with the first value of 0 and the second value of 1. Of course, this is only an optional example, and does not impose any limitation on the present disclosure). The second processing module 1022 may parse the data packet, to determine whether a data field has an idle identifier of the first value, thereby determining whether an idle data field is present in the data packet. Optionally, after loading the node data into the idle data field, the second processing module 1022 can correspondingly set an idle identifier in the data sub-block header corresponding to the data sub-block from the first value to the second value.

In some optional embodiments, the first processing module 1021 is specifically configured to: transmit, based on a priority of the node data, the node data to the second processing module 1022.

Based on the above, through such an embodiment of the present disclosure, the node data can be effectively sent to the second processing module 1022 based on the priority of the node data, so as to satisfy the requirements for node data transmission; and in addition, the node data is sent to the second processing module 1022 based on the priority of the node data, thereby satisfying the requirements for latency of the network system, avoiding the problem of data concurrency conflict, and ensuring that high-priority data is transmitted as quickly as possible.

Optionally, the first processing module 1021 may send the node data to the second processing module 1022 in descending order of priority based on priorities of a plurality of node data. For example, high-priority node data may be priorly sent to the second processing module 1022, thereby ensuring that the high-priority node data may be priorly sent as quickly as possible, to better satisfy the requirements for node data transmission, and avoiding the problem of data concurrency conflict.

Optionally, referring to FIG. 5, the data scheduling unit 102 may further comprise a plurality of first cache modules 1025 corresponding to different priorities. The first cache module 1025 may be used for caching when data is sent. The first cache module 1025 may be implemented as a storage medium of any type. The plurality of first cache modules 1025 may each be implemented as a separate storage medium, or the plurality of first cache modules 1025 may be implemented as a plurality of portions of a single storage medium. After configuring a priority to the node data, the first processing module 1021 can correspondingly cache the node data in the first cache module 1025 with a corresponding priority, such that the first processing module 1021 can conveniently send the node data to the second processing module 1022 through the first cache module 1025 corresponding to the priority of the node data.

For example, in some optional examples, the node data may have 4 priorities, namely a first priority, a second priority, a third priority, and a fourth priority. The 4 priorities are in ascending order, that is: the fourth priority>the third priority>the second priority>the first priority. Of course, the 4 priorities are only used as examples, and do not impose any limitation on the present disclosure. More types of priorities may also be flexibly configured. In order to facilitate understanding of the description, such an example may be used for illustration below.

Optionally, the data priorities may also be used for data discarding after network congestion. In case of the network congestion, low-priority data is priorly discarded, to ensure that the high-priority data can be transmitted.

In some optional embodiments, the second processing module 1022 is further configured to: increase, in response to a time during which the node data having a low priority is not loaded into the data packet exceeding a preset time, the priority of the node data, thereby priorly sending it.

If the target node is rear-positioned, no idle data field may be present when the data packet is transmitted to the target node, or high-priority data may always occupy each data field, thereby failing to send the low-priority node data from the target node all along. Based on the above, through such an embodiment of the present disclosure, when the time during which the node data having a low priority is not loaded into the data packet exceeds the preset time, the priority of the node data is increased to send it priorly, thereby avoiding the malpractice of failure to send the low-priority node data for a long time, to better satisfy the requirements for node data transmission.

Optionally, the chip 100 may further comprise a timer for timing, so that the first processing module 1021 determines whether the time for not loading the node data into the data packet exceeds the preset time based on a timing result of the timer.

Optionally, when necessary, a plurality of preset times may be set to repeatedly increase the priority of the node data. For example, the plurality of preset times may comprise a first preset time and a second preset time respectively (the second preset time may be longer than the first preset time). For example, taking the above optional example of 4 priorities as an example, the fourth priority may be understood as a highest priority, the third priority may be understood as a timeout priority, the second priority may be understood as a high priority, and the first priority may be understood as a low priority. If the priority of the node data is the first priority, and the time for not loading the node data into the data packet exceeds the first preset time, the priority of the node data can be adjusted from the first priority to the second priority, and then the timing is continued. If the time for not loading the node data into the data packet exceeds the second preset time, the priority of the node data can be adjusted from the second priority to the third priority. Of course, in some embodiments, a third preset time may also be set to adjust the priority of the node data from the third priority to the fourth priority. The third preset time may not be set by default, that is, it is not allowed to increase to the fourth priority in this way by default. Similarly, if the priority of the node data is the second priority, and the time for not loading the node data into the data packet exceeds the second preset time, the priority of the node data can be adjusted from the second priority to the third priority.

In some optional embodiments, the data packet comprises a plurality of data fields; and the second processing module 1022 is specifically configured to: determine a priority of loaded data in one data field among the plurality of data fields; and replace, in response to one data field among the plurality of data fields being a first data field in which the priority of loaded data is lower than the priority of the node data (that is, the first data field is a data field in which the loaded data has a lower priority than the node data), the loaded data in the first data field with the node data.

Based on the above, through such an embodiment of the present disclosure, high-priority node data can be allowed to replace low-priority node data in the data packet, thereby ensuring prior transmission of high-priority node data, to better satisfy the requirements for node data transmission.

Optionally, in case of presence of a plurality of first data fields, a single high-priority node data may be replaced into a single first data field.

Optionally, in case of presence a plurality of first data fields, a single high-priority node data may also be replaced into the plurality of first data fields. That is, the plurality of first data fields may also be repeatedly replaced with a single high-priority node data.

In some optional embodiments, the second processing module 1022 is further configured to: load a plurality of duplicate node data into the data packet. The plurality of duplicate node data are loaded into the data packet, to implement a repeated data transmission mechanism, and ensure that important node data can be effectively transmitted.

For example, the plurality of duplicate node data are loaded into the data packet respectively, which may be implemented by loading the plurality of duplicate node data into a plurality of adjacent data fields in the data packet respectively, or loading the plurality of duplicate node data into a plurality of data fields at intervals, wherein the intervals may comprise other data fields used to load other node data. For example, it may be applied to a transmission process of important node data. As an example, important node data includes vehicle brake data, vehicle airbag data, etc., repeated transmission may be implemented in the above manner, to ensure that important node data can be effectively transmitted.

It should be understood that the plurality of duplicate node data are loaded into the data packet, which may be implemented by repeatedly obtaining, via the second processing module 1022, the plurality of duplicate node data from the first processing module 1021 and sequentially loading the plurality of duplicate node data into the data packet, or by obtaining, via the second processing module 1022, the node data and then repeatedly loading the node data into the data packet.

In some optional embodiments, each of the data fields comprises a data sub-block and a data sub-block header, the data sub-block is used to load data, and the data sub-block header comprises priority indication information for indicating a priority of the data loaded in the data field; the second processing module 1022 is specifically configured to: determine, based on priority indication information of one data field among the plurality of data fields, a priority of data loaded in a data sub-block of the one data field; replace, in response to the one data field being one of the first data fields in which loaded data has a lower priority than the node data, the node data into the data sub-block of the first data field, and update the data sub-block header of the first data field.

Based on the above, through such an embodiment of the present disclosure, high-priority node data can effectively replace low-priority node data in the data packet, thereby effectively ensuring prior transmission of high-priority node data, to better satisfy the requirements for node data transmission, and avoid the problem of data concurrency conflict.

The optional data packet format of the data packet of the present disclosure, as well as the relevant optional contents of the data field, the data sub-block, and the data sub-block header, has been introduced above, and will not be repeated here.

Optionally, if the one data field is not one of the first data field in which loaded data has a lower priority than the node data, the above replacement may not be performed.

In some optional embodiments, the chip 100 further comprises: a replacement cache module 1026 configured to cache, after the second processing module 1022 replaces the node data into the first data field, the loaded data in the first data field prior to being replaced.

Based on the above, through such an optional embodiment of the present disclosure, data that is originally loaded in the first data field and is replaced with high-priority node data can be cached by the replacement cache module 1026, thereby facilitating subsequent re-loading of the data originally loaded in the first data field before being replaced into the data packet for transmission, to better satisfy the requirements for data transmission.

It should be understood that during replacement, the entire first data field needs to be replaced, that is, including the data sub-block header and the data sub-block. For example, high-priority node data may be replaced into the data sub-block of the first data field, and the data sub-block header of the first data field can be adaptively updated based on the high-priority node data.

In the present disclosure, the replacement cache module 1026 may be implemented as a storage medium of any type.

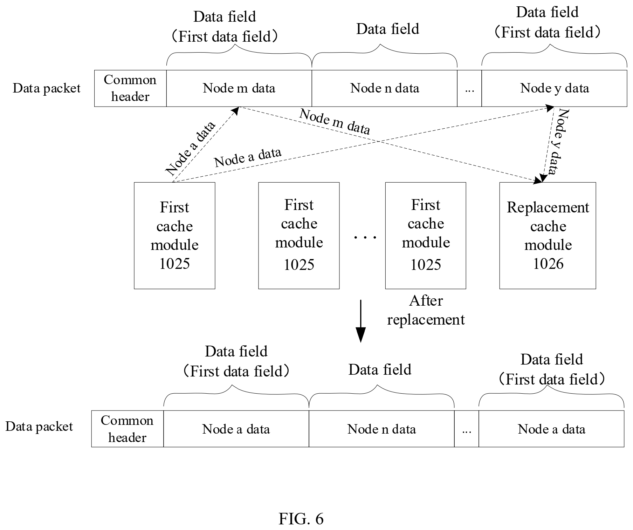

For example, referring to FIG. 6, a schematic diagram of replacing high-priority node data into a first data field is shown. As shown in FIG. 6, the data packet at least comprises 3 data fields, which are respectively loaded with node m data, node n data, and node y data. High-priority node data obtained by the second processing module 1022 from a first cache module 1025 with a higher priority (taking the leftmost first cache module 1025 in the figure as an example) is node a data (for example, node a data each having a priority of a fourth priority (which may be understood as a highest priority) is taken as an example). In case of presence of two first data fields among the 3 data fields in the data packet, for example, the two data fields are loaded with the node m data and the node y data respectively (for example, the node m data and the node y data each having a priority of a first priority (which may be understood as a lower priority) are taken as examples). The second processing module 1022 can replace the node a data into one or more of the two first data fields loaded with the node m data and the node y data. Moreover, the replacement cache module 1026 caches the data before replacement. Referring to the example in FIG. 6, the node a data is replaced together into the two first data fields loaded with the node m data and the node y data, such that single high-priority node data is repeatedly replaced into the plurality of first data fields, and the plurality of duplicate node data are loaded into the data packet, to implement the repeated data transmission mechanism. The replacement cache module 1026 caches the node m data and the node y data, and the 3 data fields of the finally replaced data packet are respectively loaded with the node a data, the node n data, and the node a data (duplicate data). The node m data and node y data cached by the replacement cache module 1026 can be subsequently re-loaded into the data packet for transmission. It should be understood that this is only used to facilitate understanding, and does not impose any limitation on the present disclosure.

To facilitate understanding, some examples of the above priority-based replacement process are described below with reference to the drawings.

For example, the target node is, as an example, the node 1 in FIG. 3A or 3B. A data transmission unit 104 of the chip 100 receives a data packet transmitted from the node 0 based on the physical layer and transmits the data packet to the second processing module 1022 of the data scheduling unit 102 via a real-time pipeline. Assuming that the data packet totally comprises three data fields sequentially arranged in the data packet, for example, the data fields are denoted as data fields 1, 2, and 3, respectively, data loaded in the data fields is denoted as data 1, 2, and 3, respectively, and priorities of the data loaded therein are a second priority (which may be understood as a high priority), a first priority (which may be understood as a low priority), and a fourth priority (which may be understood as a highest priority), respectively, the second processing module 1022, when first receiving the data field 1 transmitted via the real-time pipeline, processes the received data field via the real-time pipeline, and if node data (for example, denoted as node data A) obtained by the second processing module 1022 from the first processing module 1021 has a priority of the fourth priority, the node data A has a higher priority than the data 1 loaded in the data field 1, that is, the data field 1 is the first data field. Therefore, the node data A can be replaced into the data field 1 of the data packet, thus implementing a 1st replacement. After the data packet is replaced, the loaded data includes: the node data A, the data 2, and the data 3. The data 1 is stored in the replacement cache module 1026. The second cache module 1026 then receives the data field 2 transmitted via the real-time pipeline, and continues to process the data packet via the real-time pipeline. The data 1 originally loaded in the data field 1 has a higher priority than the data 2 originally loaded in the data field 2. The second processing module 1022 can replace the data 1 originally loaded in data field 1 into the data field 2, thus implementing a 2nd replacement. After the data packet is replaced, the loaded data includes: the node data A, the data 1, and the data 3. If an idle data field (for example, denoted as the data field 4) remains in a rear portion of the data packet, the data 2 originally loaded in the data field 2 can be loaded into the idle data field 4. In this case, after the data packet is replaced, the loaded data includes: the node data A, the data 1, the data 3, and the data 2. If no idle data field is present in the rear portion of the data packet, the data 2 originally loaded in the data field 2 can be stored in the replacement cache module 1026, to subsequently transmit an additional data packet received from the node 0. It can be seen that the above replacement example can ensure that high-priority data is priorly transmitted. It should be understood that this is only used to facilitate understanding, and does not impose any limitation on the present disclosure.

For another example, the target node is, as an example, the node 1 in FIG. 3A or 3B. A data transmission unit 104 of the chip 100 receives a data packet transmitted from the node 0 based on the physical layer, and transmits the data packet to the second processing module 1022 of the data scheduling unit 102 via a real-time pipeline. Assuming that the data packet totally comprises three data fields in sequence, for example, denoted as data fields 1, 2, and 3, respectively, data loaded in the three data fields are denoted as data 1, 2, and 3, respectively, and the data loaded in the three data fields each has a priority of a second priority (which may be understood as a high priority). The second processing module 1022, when receiving the data field 1 transmitted via the real-time pipeline, processes the received data field via the real-time pipeline, and if node data (for example, denoted as node data B) obtained by the second processing module 1022 from the first processing module 1021 has a priority of a first priority (which may be understood as a low priority), the node data B has a lower priority than the data 1 loaded in the data field 1, that is, the data field 1 is not the first data field, and replacement is not implemented. When the data fields 2 and 3 are received, neither of them is the first data field, so that replacement is not implemented, either. Then, timing can be performed. After the node data B with the first priority is not loaded into the data packet for a time exceeding a preset time, its priority is increased (for example, increased to the second priority after the time exceeds the first preset time). Then, the data field of the data packet transmitted from the node 0 is received, and whether it is the first data field is determined. If it is the first data field, the node data B is replaced into the first data field. It should be understood that this is only used to facilitate understanding, and does not impose any limitation on the present disclosure.

In some optional embodiments, the second processing module 1022 is configured to: obtain the data packet from the data transmission unit 104, obtain data corresponding to the target node from the data packet, and transmit the data corresponding to the target node to the first processing module 1021; and the first processing module 1021 is configured to: transmit the data corresponding to the target node to a peripheral device 1023 connected to the target node, and/or transmit the data corresponding to the target node to a local module of the target node.

Based on the above, in the above embodiments of the present disclosure, the second processing module 1022 can obtain the data corresponding to the target node from the data packet, and transmit the data corresponding to the target node to the first processing module 1021. The first processing module 1021 can transmit the data corresponding to the target node to the peripheral device 1023 connected to the target node, such that the peripheral device can use such data to satisfy the requirements for use by the peripheral device. The second processing module 1022 can transmit the data corresponding to the target node to the local module of the target node, to ensure that the chip 100 can receive data to be transmitted to the target node directly based on the physical layer for utilization.

It should be understood that the data corresponding to the target node may be data indicating that a destination node is the target node as indicated by destination node identification information recorded in a data sub-block header of each data field in the data packet below, or may be common data to be obtained by each node in the network, for example, but not limited to audio data. Taking the audio data as an example, that is, when the data field is loaded with the audio data, the data sub-block header does not need to carry the destination node identification information.

In the present disclosure, the data corresponding to the target node in the data packet may be data sent from the host downward to the target node and the peripheral device connected to the target node (which may include, but is not limited to, configuration data, control data, etc., of the host for the target node), or may be data sent from other nodes to the target node and the peripheral device connected to the target node (which may include, but is not limited to, node data generated by the other nodes), which is not limited in the present disclosure.

Optionally, the local module of the target node may be any local module of the target node, for example, may include at least one of, e.g., a memory or a register in the target node. The first processing module 1021 transmits the data corresponding to the target node to the local module, to implement at least one of, e.g., data storage, register configuration, or target node control.

In some optional embodiments, the data packet comprises a plurality of data fields, each of the data fields comprises a data sub-block and a data sub-block header, the data sub-block is configured to load data, and the data sub-block header is configured to record destination node identification information for indicating a destination node to which data loaded in the data sub-block is to be transmitted; and the second processing module 1022 is specifically configured to: determine whether a second data field is present in each data field based on the destination node identification information recorded in the data sub-block header of each data field, wherein destination node identification information recorded in a data sub-block header of the second data field indicates that a destination node of data loaded in the second data field is the target node (that is, the second data field is the data field whose destination node is the target node as indicated by the destination node identification information recorded in the data sub-block header); and obtain, in response to the second data field being present, data loaded in a data sub-block of the second data field from the data packet.

Based on the above, in the above embodiments of the present disclosure, the second processing module 1022 can accurately determine whether the second data field is present in each data field of the data packet based on the destination node identification information, and can, when the second data field is present, accurately obtain the data loaded in the data sub-block of the second data field from the data packet, thereby accurately and effectively ensuring that the chip 100 can receive the data to be transmitted to the target node directly based on the physical layer.

The optional data packet format of the data packet of the present disclosure, as well as the relevant optional contents of the data field, the data sub-block, and the data sub-block header, has been introduced above, and will not be repeated here. For example, the target node identification information may be, e.g., a node number of the destination node or an address of the destination node.

For example, taking the node 1 in FIG. 3A or 3B as an example, when the chip 100 obtains a data packet transmitted from the node 0, the second processing module 1022 of the chip 100 of the node 1 parses the data packet to determine whether a second data field is present in each data field in the data packet (the target node identification information indicates, as an example, a node number of the destination node, that is, determine whether the node number of the destination node recorded in the data sub-block header of each data field is the node number of the target node (i.e., the node 1)), and obtain, in response to the second data field being present, data in the data sub-block of the second data field (i.e., data corresponding to the node 1). It should be understood that this is only used to facilitate understanding, and does not impose any limitation on the present disclosure.

In some optional embodiments, when the target node is an intermediate node of the network system, the second processing module 1022 is configured to: obtain the data packet from the first data transmission unit, and transmit, in response to identifying that the data packet does not include data having the target node as a destination node, the data packet to the second data transmission unit.

Based on the above, in the present disclosure, the data whose destination node is the target node is not present in the data packet, so that the data packet can be transparently forwarded to improve the speed of data packet transmission directly based on the physical layer, and satisfy the requirements for timeliness of data transmission in the network system.

Specifically, if it is determined that the second data field is not present in each data field, the second processing module 1022 may not obtain data from the data packet, and may transparently forward the data packet. For example, the target node is, as an example, an intermediate node (which may be understood as the node 1 in FIG. 3A or 3B). It comprises two data transmission units 104, namely a first data transmission unit and a second data transmission unit. After receiving a data packet transmitted from a preceding node adjacent to the target node in the network system (for example, understood as the node 0 in FIG. 3A or 3B), the first data transmission unit transmits the data packet to the second processing unit 1022 for processing. When determining that the second data field is not present in each data field of the data packet, the second processing module 1022 does not obtain data from the data packet, and can transmit the data packet to the second data transmission unit. The second data transmission unit transmits the data packet to the succeeding node adjacent to the target node (for example, understood as the node 2 in FIG. 3A or 3B), to transparently forward the data packet.

In some optional embodiments, the second processing module 1022 is further configured to: mark, in response to obtaining the data loaded in the data sub-block of the second data field, the second data field as an idle data field in the data packet.

Based on the above, in the above embodiments of the present disclosure, after obtaining the data, the second processing module 1022 marks the corresponding second data field as an idle data field, which can facilitate subsequent use of the idle data field used to load data, to better satisfy the requirements for data transmission.

It should be understood that in the present disclosure, the second data field can be marked as the idle data field in the data packet in any suitable manner. Optionally, as mentioned above, the data sub-block comprised in the data field may comprise an idle identifier, and the idle identifier may indicate whether the data field is idle. For example, when the idle identifier is a first value, the data field is an idle data field, and when the idle identifier is a second value, the data field is a non-idle data field (for ease of understanding, it can be simply understood as that a blank identifier is a 1-bit binary identifier with the first value of 0 and the second value of 1. Of course, this is only an optional example, and does not impose any limitation on the present disclosure). Optionally, after obtaining the data loaded in the data sub-block of the second data field, the idle identifier in the data sub-block header corresponding to the data sub-block can be correspondingly set from the second value to the first value, thereby marking the second data field as an idle data field in the data packet.

In some optional embodiments, the first processing module 1021 is further configured to: pack, in response to identifying that unpacking identification information for indicating that the data is unpacked data is present in data corresponding to a plurality of target nodes, the data corresponding to the plurality of the target nodes, to obtain packed data, transmit the packed data to the peripheral device 1023 connected to the target nodes, and/or transmit the packed data to the local module of the target nodes.

Based on the above, in the present disclosure, through such a first processing module 1021, the unpacked data is packed, and the obtained packed data is transmitted to the peripheral device 1023 connected to the target node and/or the packed data is transmitted to the local module of the target node, thereby ensuring the integrity of the data transmitted to the peripheral device 1023 and/or the local module of the target node, so as to facilitate data transmission and satisfy the requirements for use of data by the peripheral device and the target node.

Optionally, the first processing module 1021 may send combined data to the corresponding peripheral device through a peripheral interface 1024.

In some optional embodiments, the second processing module 1022 is further configured to: transmit the data corresponding to the target node to the first processing module 1021 based on a priority of the data corresponding to the target node.

Based on the above, the second processing module 1022 in the present disclosure transmits the data corresponding to the target node to the first processing module 1021 based on the priority of the data corresponding to the target node, so as to satisfy the requirements for node data transmission, meet the requirements for latency of the network system, and avoid the problem of data concurrency conflict.

Optionally, referring to FIG. 5, the data scheduling unit 102 may further comprise a plurality of second cache modules 1027 corresponding to different priorities. The second cache module 1027 may be used for caching when data is received. The second cache module 1027 may be implemented as a storage medium of any type. The plurality of second cache modules 1027 may each be implemented as a separate storage medium, or the plurality of second cache modules 1027 may be implemented as a plurality of portions of a single storage medium. After obtaining the data corresponding to the target node, the second processing module 1022 can cache the data in the second cache module 1027 with a corresponding priority according to its priority, such that the first processing module 1021 can obtain the data from the second cache module 1027 in descending order of priority. For example, the first processing module 1021 priorly obtains data from the second cache module 1027 with a higher priority.

It should be noted that in the present disclosure, the processing logic of the second processing module 1022 on "transmitting the data corresponding to the target node to the first processing module 1021 based on the priority of the data corresponding to the target node" is similar to the processing logic of the above first processing module 1021 on "transmitting the node data to the second processing module 1022 based on the priority of the node data", each of which is to priorly transmit high-priority data, so as to ensure that the high-priority data can be priorly transmitted, better satisfy the requirements for node data transmission, and avoid the problem of data concurrency conflict.

Optionally, in some optional embodiments, the first cache module 1025, the replacement cache module 1026, and the second cache module 1027 may be implemented as different portions of one or more storage mediums.

In some other optional embodiments, the second processing module 1022 may transmit the data corresponding to the target node to the first processing module 1021, without introducing the above priority, as long as the transmission requirements can be satisfied, which is not limited in the present disclosure.

It is understandable that the above relevant description of the chip 100 in the present disclosure only provides some optional embodiments in the present disclosure, and do not impose any limitation on the embodiments in the present disclosure.

According to an embodiment in a second aspect of the present disclosure, a network system is provided, comprising: a plurality of nodes connected, wherein any node among the plurality of nodes comprises the chip 100 according to any one implementation in the first aspect, and the chip 100 is used by the node to implement data transmission based on the physical layer.

Optionally, a ring-shaped network structure may be used for the network system in the present disclosure (for example, understood with reference to FIG. 3A and relevant description thereof). It should be understood that the number of nodes may be more or less. That is, in the network system, the plurality of nodes are connected to form a ring-shaped network structure, the plurality of nodes comprise a master node and at least two child nodes, the master node initiates transmission of a data packet, and the data packet is sequentially transmitted through the at least two child nodes and then received by the master node. Based on the network system with the ring-shaped network structure, in the process of transmitting the data packet based on the physical layer in the network, a child node can add new data to the data packet initiated by the master node based on the configuration and actual application requirements, or obtain data in the data packet transmitted in the network, wherein a given data packet can carry data of different types simultaneously, to form more flexible network data transmission, improve the data transmission efficiency and bandwidth, reduce the latency in data transmission, and reduce the network costs.

Optionally, a daisy-chain network structure may also be used (for example, understood with reference to FIG. 3B and relevant description thereof). The daisy-chain network structure may be formed by disconnecting two adjacent nodes of the ring-shaped network structure. It should be understood that the number of nodes may be more or less.

According to an embodiment in a third aspect of the present disclosure, an electronic device is provided, comprising: the chip 100 according to any one implementation in the first aspect.

Optionally, the electronic device may be used as a node in the network system, to implement data transmission using the chip 100.

In the embodiments of the present disclosure, an embodiment of the network/electronic device has been described in detail in the above embodiments of the chip 100. Therefore, relevant content and beneficial effects thereof may be understood with reference to the above embodiments, and will not be repeated here.

In addition, it should be noted that user-related information (including but not limited to user device information, user personal information, etc.) and data (including but not limited to sample data for model training, data for analysis, stored data, displayed data, etc.) involved in the embodiments of the present disclosure are all information and data that are authorized by a user or fully authorized by all parties. Relevant data needs to be collected, used, and processed following relevant laws, regulations, and standards of relevant countries and regions, and be provided with a corresponding operation portal for users to choose or refuse authorization.

It should be noted that, depending on the implementation requirements, the components/steps described in the embodiments of the present disclosure may be split into more components/steps, or two or more components/steps or partial operations of the components/steps may be combined into novel components/steps to achieve the goal of the embodiments of the present disclosure. It should be understood that various technical features in the technical solutions of the embodiments of the present disclosure can be combined in any suitable manner.

The above method according to the embodiments of the present disclosure may be implemented in hardware or firmware, or be implemented as software or a computer code storable in a recording medium (such as a CD-ROM, a RAM, a floppy disk, a hard disk, or a magneto-optical disk), or be implemented as a computer code that is downloaded from a network, is originally stored in a remote recording medium or a non-transitory machine-readable medium, and will be stored in a local recording medium, such that the method described herein may be processed by such software stored on a recording medium using a general-purpose computer, a special-purpose processor, or programmable or dedicated hardware (such as an Application Specific Integrated Circuit (ASIC) or a Field Programmable Gate Array (FPGA)). It is understandable that a computer, a processor, a microprocessor controller, or programmable hardware includes a storage component (e.g., a Random Access Memory (RAM), a Read-Only Memory (ROM), or a flash memory) that can store or receive software or a computer code. The method described herein is implemented when the software or the computer code is accessed and executed by the computer, the processor, or the hardware. Further, when the general-purpose computer accesses the code for implementing the method shown herein, the execution of the code converts the general-purpose computer to a dedicated computer configured to implement the method shown herein.

As will be appreciated by those of ordinary skills in the art, the various example units and method steps described in combination with the embodiments disclosed herein can be implemented by electronic hardware, or a combination of computer software and electronic hardware. Whether these functions are executed by hardware or software depends on particular applications and design constraints of the technical solutions. Those skilled in the art may implement the described functions for particular applications using different methods, but such implementation should not be considered as falling beyond the scope of the embodiments of the present disclosure.

The above embodiments are only used to illustrate the embodiments of the present disclosure, and are not intended to limit the embodiments of the present disclosure. Those of ordinary skills in the relevant technical field may further make various alterations and modifications without departing from the spirit and scope of the embodiments of the present disclosure. Therefore, all equivalent technical solutions are also encompassed within the scope of the embodiments of the present disclosure, and the scope of patent protection of the embodiments of the present disclosure should be defined by the claims.

The term "including" and variations thereof used herein are open-ended inclusion, i.e., "including, but not limited to." The term "based on" is "at least partially based on." The term "an embodiment" means "at least one embodiment"; the term "another embodiment" means "at least one additional embodiment"; and the term "some embodiments" means "at least some embodiments". It should be noted that the concepts such as "first" and "second" mentioned in the embodiments of the present disclosure are only used to distinguish among different apparatuses, modules or units, and are not used to limit the order or interdependence relationship of the functions implemented by these apparatuses, modules or units. It should be noted that the modification by "a" or "plurality of" referred to in the embodiments of the present disclosure is meant to be illustrative and non-restrictive, and should be construed as "one or more", unless otherwise explicitly indicated in the context, as will be appreciated by those skilled in the art.

Finally, it should be noted that: the above embodiments are merely used to illustrate the technical solutions in the embodiments of the present disclosure, instead of imposing any limitation on the technical solutions. While the embodiments of the present disclosure are described in detail with reference to the above embodiments, those of ordinary skills in the art should understand that: the technical solutions disclosed in the above embodiments may still be modified or a part of the technical features thereof may be replaced equivalently. These modifications or replacements are not intended to depart the essence of corresponding technical solutions from the spirit and scope of the technical solutions in the embodiments of the present disclosure.

## Claims

1. A chip for a target node of a network system to implement data transmission, wherein the network system comprises a plurality of nodes connected, the target node is any node among the plurality of nodes; and the chip comprises: a data scheduling unit and at least one data transmission unit;
wherein the data scheduling unit is configured to: obtain a data packet and process the data packet based on a physical layer; and
the at least one data transmission unit is configured to: receive the data packet and transmit the data packet to the data scheduling unit for processing based on the physical layer, and/or transmit a data packet processed by the data scheduling unit to a node adjacent to the target node in the network system based on the physical layer.

2. The chip according to claim 1, wherein the chip implements data transmission via a real-time pipeline, wherein
the data scheduling unit is configured to: process the data packet based on the physical layer via the real-time pipeline; and
the at least one data transmission unit is configured to: transmit the data packet to the data scheduling unit via the real-time pipeline, and/or transmit the data packet processed by the data scheduling unit to the node adjacent to the target node in the network system via the real-time pipeline.

3. The chip according to claim 1, wherein the at least one data transmission unit comprises a first data transmission unit and a second data transmission unit, wherein
the first data transmission unit is configured to: receive a data packet transmitted from a preceding node adjacent to the target node in the network system, and transmit the data packet to the data scheduling unit for processing, such that the data scheduling unit transmits a processed data packet to the second data transmission unit; and
the second data transmission unit is configured to: receive the data packet processed by the data scheduling unit, and transmit the processed data packet to a succeeding node adjacent to the target node in the network system.

4. The chip according to claim 1, wherein the data packet comprises a common header, and the common header comprises a preamble for identifying a physical layer protocol of the data packet.

5. The chip according to any one of claims 1-4, wherein the data scheduling unit comprises: a first processing module and a second processing module; wherein
the first processing module is configured to: obtain node data, and then send processed node data to the second processing module, wherein the node data is generated by the target node, or the node data is generated by a peripheral device connected to the target node; and
the second processing module is configured to: obtain the data packet, and load the node data obtained from the first processing module into the data packet, such that at least one data transmission unit transmits the data packet loaded with the node data to the node adjacent to the target node in the network system.

6. The chip according to claim 5, wherein the data packet comprises a plurality of data fields; and
the second processing module is specifically configured to: load, in response to an idle data field being present in the data packet, the node data into the idle data field.

7. The chip according to claim 5, wherein
the first processing module is specifically configured to: transmit, based on a priority of the node data, the node data to the second processing module.

8. The chip according to claim 7, wherein the data packet comprises a plurality of data fields; and
the second processing module is specifically configured to: determine a priority of loaded data in one data field among the plurality of data fields; and replace, in response to one data field among the plurality of data fields being a first data field in which the priority of loaded data is lower than the priority of the node data, the loaded data in the first data field with the node data.

9. The chip according to claim 8, wherein the chip further comprises:
a replacement cache module configured to: cache, after the second processing module replaces the node data into the first data field, the loaded data in the first data field prior to being replaced.

10. The chip according to claim 7, wherein
the second processing module is further configured to: increase, in response to a time during which the node data having a low priority is not loaded into the data packet exceeding a preset time, the priority of the node data.

11. The chip according to claim 5, wherein
the first processing module is further configured to: unpack the node data in response to the node data having a data length greater than a preset length, to obtain at least two node data fragments each with a data length less than or equal to the preset length, transmit the node data fragments to the second processing module; and directly transmit the node data to the second processing module in response to the node data having the data length less than or equal to the preset length.

12. The chip according to claim 5, wherein
the second processing module is further configured to: load a plurality of duplicate node data into the data packet.

13. The chip according to any one of claims 1-4, wherein the data scheduling unit comprises: a first processing module and a second processing module; wherein
the second processing module is configured to: obtain the data packet from the data transmission unit, obtain data corresponding to the target node from the data packet, and transmit the data corresponding to the target node to the first processing module; and
the first processing module is configured to: transmit the data corresponding to the target node to a peripheral device connected to the target node, and/or transmit the data corresponding to the target node to a local module of the target node.

14. The chip according to claim 3, wherein the data scheduling unit comprises: a second processing module; wherein
the second processing module is configured to: obtain the data packet from the first data transmission unit, and transmit, in response to identifying that the data packet does not include data having the target node as a destination node, the data packet to the second data transmission unit.

15. The chip according to claim 13, wherein the data packet comprises a plurality of data fields, each of the data fields comprises a data sub-block and a data sub-block header, the data sub-block is configured to load data, and the data sub-block header is configured to record destination node identification information for indicating a destination node to which data loaded in the data sub-block is to be transmitted; and
the second processing module is specifically configured to: determine whether a second data field is present in each data field based on the destination node identification information recorded in the data sub-block header of each data field, wherein destination node identification information recorded in a data sub-block header of the second data field indicates that a destination node of data loaded in the second data field is the target node; and obtain, in response to the second data field being present, data loaded in a data sub-block of the second data field from the data packet.

16. The chip according to claim 15, wherein
the second processing module is further configured to: mark, in response to obtaining the data loaded in the data sub-block of the second data field, the second data field as an idle data field in the data packet.

17. The chip according to claim 13, wherein
the second processing module is further configured to: transmit the data corresponding to the target node to the first processing module based on a priority of the data corresponding to the target node.

18. The chip according to claim 13, wherein
the first processing module is further configured to: pack, in response to identifying that unpacking identification information for indicating that the data is unpacked data is present in data corresponding to a plurality of target nodes, the data corresponding to the plurality of the target nodes, to obtain packed data, transmit the packed data to the peripheral device connected to the target nodes, and/or transmit the packed data to the local module of the target nodes.

19. The chip according to claims 1-4, wherein the data packet comprises a plurality of data fields, and the plurality of data fields are configured to be simultaneously loaded with data of at least two different data types.

20. The chip according to claims 1-4, wherein the target node is connected to a peripheral device, and the peripheral device comprises at least one of types below:
a LIN bus peripheral device, a PWM drive device, an I2C peripheral device, a SPI bus peripheral device, a QSPI bus peripheral device, a GPIO peripheral device, an Ethernet peripheral device, a CAN bus peripheral device, a peripheral device with a MII and peripheral devices with various extensions and derivatives of the MII, a UART peripheral device, a SENT bus peripheral device, a peripheral device supporting PSI5 protocol, an I2S peripheral device, a TDM peripheral device, an AMIC peripheral device, a DMIC peripheral device, and an ADC peripheral device.

21. The chip according to any one of claims 1-4, wherein the data packet comprises a plurality of data fields temporally divided into a plurality of time slices, such that a preceding data field among the plurality of data fields in the data packet is temporally first transmitted or processed by the target node.

22. A network system, comprising: a plurality of nodes connected, wherein any node among the plurality of nodes comprises the chip according to any one of claims 1-21, and the chip is used by the node to implement data transmission based on the physical layer.

23. The network system according to claim 22, wherein the plurality of nodes are connected to form a ring-shaped network structure, the plurality of nodes comprise a master node and at least two child nodes, the master node initiates transmission of a data packet, and the data packet is sequentially transmitted through the at least two child nodes and then received by the master node.

24. An electronic device, comprising: the chip according to any one of claims 1-21.
